# EUROPEAN PATENT SPECIFICATION

(11) **EP 1 738 480 B1**
(45) Date of publication and mention of the grant of the patent: **03.06.2009**
(21) Application number: 05718703.1
(22) Date of filing: 12.04.2005
(51) Int. Cl.: H04B 1/713

(54) **DEVICE FOR USE IN A FREQUENCY HOPPING SYSTEM**
EINRICHTUNG ZUR VERWENDUNG IN EINEM FREQUENZSPRUNGSYSTEM
DISPOSITIF UTILISE DANS UN SYSTEME A EVASION DE FREQUENCE

(30) Priority: 15.04.2004 EP 04101555
(43) Date of publication of application: 03.01.2007
(73) Proprietor: DSP Group Switzerland AG, 8045 Zürich (CH)
(72) Inventor: RENGERT, Otmar, NL-5656 AA Eindhoven (NL)
(74) Representative: Reinhard - Skuhra - Weise & Partner GbR
(86) International application number: PCT/IB2005/051197
(87) International publication number: WO 2005/101683

(56) References cited:
- WO-A-01/11795
- US-A- 5 586 141
- US-A1- 2002 021 746

## Description

The invention relates to a device for use in a frequency hopping system, and also relates to a frequency hopping system, to a circuit for use in a device, to a method, to a processor program product and to a radio frequency signal.

Examples of such a device are terminals or portable units and stations or fixed units in digital cordless telephony systems.

A prior art device is known from WO 00/74257 A1, which discloses a method of frequency acquisition in a frequency hopping system. In such a frequency hopping system, a transmitter continuously hops through a predetermined and fixed sequence of N frequencies (N ≥ 2). A receiver has stored the same sequence of N frequencies, but does not know at first, which one of the frequencies is currently being used. Therefore, the receiver must detect this frequency and synchronize with the phase of the sequence.

So, the prior art sequence is fixed: It comprises a fixed number of fixed frequencies. Further, this sequence is an inflexible compromise: To be as robust against interference as possible for the purpose of maintaining lock, the sequence should be long: Compared to a shorter sequence, a longer sequence reduces a worst case impact of interfered channels. But to be as robust against interference as possible for the purpose of an active connection, the sequence should be short: Compared to a longer sequence, a shorter sequence requires a smaller number of frequency substitutions or frequency removals to get rid of the interfered channels.

The known device is disadvantageous, inter alia, owing to the fact that the device has a relatively bad overall performance by virtue of having an inflexible use of hopping sequences.

U.S. patent No. 5,5,86,141 discloses a method of communicating between two or more radios each capable of transmitting and receiving signals between one and another and two or more radio channels. The radios hop from channel to channel in a pseudo-random sequence. Hop synchronization is established between the radios utilizing a first cycle and operating the radios in a communication mode is established by utilizing a second cycle. The first cycle is shorter than the second cycle.

Published U.S. application for patent No. 2002/0021746 A1 discloses a Bluetooth system which can reduce the number of RF channels it hops during a normal hopping sequence cycle providing for reduced hopping sequence.

Published International application for patent No. 01/22795 A1 discloses to choose a specific cyclic sequence of frequencies for use as a carrier hop sequence by a mobile station in a mobile radio communication system from a list of usable frequencies by means of a sequence of indices derived from the unique identifier of the mobile station.

It is an object of the invention, inter alia, to provide a device which has a relatively good overall performance.

Further objects of the invention are, inter alia, to provide a frequency hopping system, a circuit, a method, a processor program product and a radio frequency signal, all for use in (combination with) a device which has a relatively good overall performance.

The device according to the invention, for use in a frequency hopping system for frequency hopping through frequencies of a sequence of frequencies, comprises a selector adapted to select a sequence from a number of sequences, which number of sequences comprises a first sequence and a second sequence, which first sequence is longer than the second sequence, and a controller adapted to control the selector to select the first sequence during synchronizing and setting up a connection of the device with a further device and to select the second sequence during the connection with the further device.

The first and second sequences can for example be stored in the device. The selector selects the longer or the shorter sequence. The device according to the invention has a better overall performance by virtue of having a relatively flexible use of hopping sequences. The inflexible compromise is avoided, because the longer sequence is selected in case the longer sequence is needed, and the shorter sequence is selected in case the shorter sequence is needed. This is a great advantage. Further advantages are an increased overall quality and a reduced power consumption: The quality is increased by virtue of using a more suitable sequence length for different phases of operation of the device. The power consumption is reduced compared to a device only using the short sequences by virtue of not requiring increased control messages to maintain the hopping sequences. Of course, more than two sequences having different lengths may be used.

It should be noted that CA 2 339 515 discloses a pilot use in orthogonal frequency division multiplexing based spread spectrum multiple access systems. In these systems, pilot tone hopping sequences can be truncated whenever the tone frequency exceeds the available bandwidth. Then, these tones are designated as phantom tones and are not transmitted. So, CA 2 339 515 does not disclose the selection of one of at least two sequences of different lengths.

An embodiment of the device according to the invention is defined by further comprising a monitor adapted to monitor channels in use for at least one of the sequences for, in dependence of a monitoring result, selecting at least one sequence. In this case, the monitoring result forms the basis for the selection of the sequence. Of course, instead of making the selection dependent on the monitoring result directly, the selection may be made dependent on the monitoring result indirectly. The latter is for example done by firstly converting the monitoring result into quality measures and secondly letting these quality measures form the basis for the selection of the sequence.

An embodiment of the device according to the invention is defined by further comprising a generator adapted to generate the number of sequences. In this case, the first and second sequences are generated by the generator.

An embodiment of the device according to the invention is defined by the generator generating the number of sequences by entering an identity code into an algorithm. In this case, the identity code may be unique per system, where a system comprises any number of portable devices and any number of fixed devices that operate together. Each of the portable parts and fixed parts have the same identity code, either by pre-programming or by a process of a data exchange between the devices.

An embodiment of the device according to the invention is defined by further comprising a monitor adapted to monitor channels in use for at least one of the sequences and further comprising a modifier adapted to modify at least one sequence in dependence of a monitoring result. In this case, at least one sequence may be modified in dependence of a monitoring result. A modification may comprise one or more added frequencies, one or more removed frequencies, and/or one or more replaced frequencies. The dependency on the monitoring result may be direct or indirect.

An embodiment of the device according to the invention is defined by the second sequence being a subset of the first sequence. In this case, any monitoring of channels may be limited to the channels of the first sequence, because these channels include the channels of the second sequence.

The frequency hopping system according to the invention comprises a terminal device such as for example a portable device and a station device such as for example a fixed device.

The circuit according to the invention is for example a radio frequency circuit further comprising for example a transmitter, a receiver or a transceiver.

Embodiments of the frequency hopping system according to the invention and of the circuit according to the invention and of the method according to the invention and of the processor program product according to the invention and of the radio frequency signal according to the invention correspond with the embodiments of the device according to the invention.

The invention is based upon an insight, inter alia, that a fixed sequence in a frequency hopping system is an inflexible compromise, and is based upon a basic idea, inter alia, that different sequences with different lengths are to be used at different times in frequency hopping systems.

The invention solves the problem, inter alia, to provide a device which has a relatively good overall performance, and is advantageous, inter alia, in that the inflexible compromise is avoided. The overall quality is increased, and the power consumption is reduced.

These and other aspects of the invention will be apparent from and elucidated with reference to the embodiments(s) hereinafter.

In the drawings:
Fig. 1 shows in block diagram form a device according to the invention comprising a circuit according to the invention;
Fig. 2 shows in block diagram form a frequency hopping system according to the invention;
Fig. 3 shows a time diagram with radio frequency signals according to the invention; and
Fig. 4 shows a flow chart of a method according to the invention.

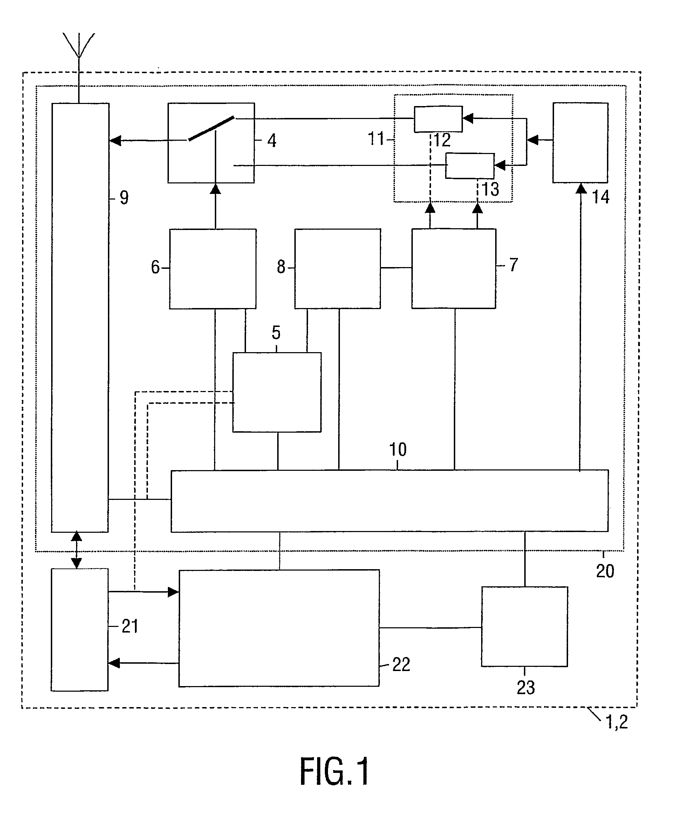

The device 1, 2 according to the invention shown in Fig. 1 such as for example a terminal device 1 or portable part or a station device 2 or fixed part comprises a circuit 20.

The circuit 20 comprises a transceiver 9 coupled to an antenna. A control input of the transceiver 9 is coupled to an output of a selector 4 and a control input/output of the transceiver 9 is coupled to a control input/output of a processor system 10 via a coupling. The processor system 10 for example comprises a processor and a memory. A first input of the selector 4 is coupled to a first field 12 of a memory 11 for storing a first (longer) sequence of frequencies. A second input of the selector 4 is coupled to a second field 13 of a memory 11 for storing a second (shorter) sequence of frequencies. The first and second fields 12 and 13 are further coupled to an output of a counter 14. A control input of the counter 14 is coupled to a control output of the processor system 10.

The circuit 20 further comprises a monitor 5, a controller 6, a generator 7 and a modifier 8. The controller 6 is coupled to the processor system 10. A control output of the controller 6 is coupled to a control input of the selector 4 for selecting one of the inputs of the selector 4 being connected to its output. The generator 7 is coupled to the processor system 10. A first control output of the generator 7 is coupled to a first control input of the memory 11 for accessing the first field 12. A second control output of the generator 7 is coupled to a second control input of the memory 11 for accessing the second field 13. The generator 7 is further coupled to the modifier 8. The modifier 8 is further coupled to the processor system 10 and to the monitor 5. The monitor 5 is further coupled to the processor system 10 and to the controller 6, and may further be coupled to the coupling between the transceiver 9 and the processor system 10.

The device 1,2 further comprises a coupler 21 coupled to the transceiver 9. An output of the coupler 21 is coupled to an input of a man-machine-interface 22 via a coupling, which coupling may further be coupled to the monitor 5. An input of the coupler 21 is coupled to an output of the man-machine-interface 22. The man-machine-interface 22 is further coupled to a memory 23 and to the processor system 10. The memory 23 is further coupled to the processor system 10. The man-machine-interface 22 for example comprises a keyboard, a display, a loudspeaker, a microphone etc.

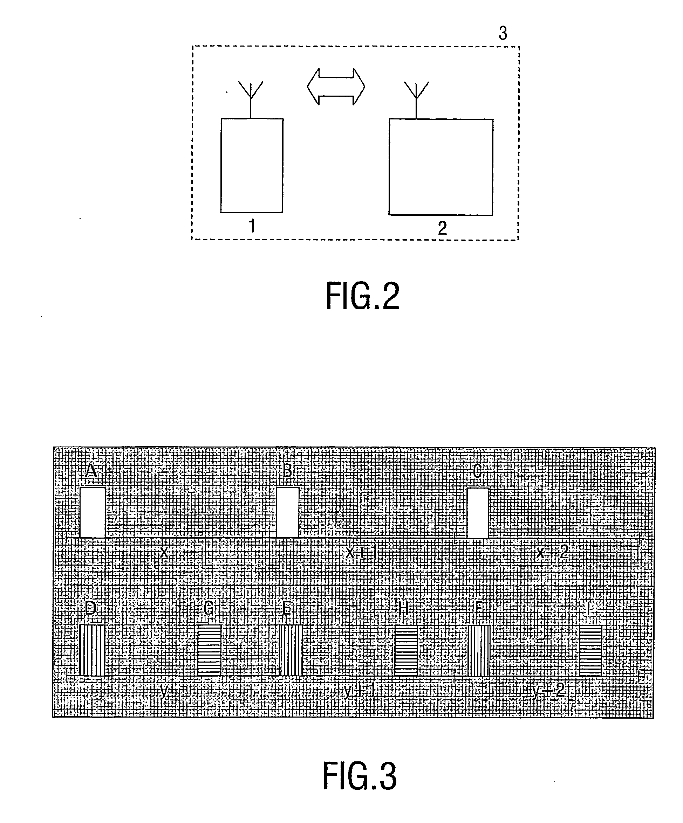

The frequency hopping system 3 according to the invention shown in Fig. 2 such as for example a digital cordless telephony system comprises a terminal device 1 and a station device 2.

The time diagram with radio frequency signals according to the invention shown in Fig. 3 discloses in its upper part three frames x, x+1 and x+2, this shows a synchronization phase. In frame x, a radio frequency signal A is exchanged via a channel a. In frame x+1, a radio frequency signal B is exchanged via a channel b. In frame x+2, a radio frequency signal C is exchanged via a channel c. The signals A, B and C are for example transmitted from the station device 2 to the terminal device 1. The channels a, b and c are selected from the first (longer) sequence of frequencies referenced by the value of the frame and the time slot in which the signals A, B and C are transmitted. The element to use from the first (longer) sequence is defined by (F+T)%L, with F being the frame, T being the time slot and L being the length of the first sequence of frequencies. In a first mode (synchronization and set-up), the first (longer) sequence of channels is used in the downstream direction. In a second mode (active connection), the first (longer) sequence of channels is used in the downstream and the upstream direction.

In its lower part, Fig. 3 discloses three frames y, y+1 and y+2, this shows an active phase. In frame y, a radio frequency signal D is exchanged via a channel d and a radio frequency signal G is exchanged via a channel g. In frame y+1, a radio frequency signal E is exchanged via a channel e and a radio frequency signal H is exchanged via a channel h. In frame y+2, a radio frequency signal F is exchanged via a channel f and a radio frequency signal I is exchanged via a channel i. The signals D, E and F are for example transmitted from the station device 2 to the terminal device 1, and the signals G, H and I are for example transmitted vice versa. The channels d, e and f are selected from a second (shorter) sequence of downstream frequencies referenced by the value of the frame in which the signals D, E and F are transmitted. The element to use from the second (shorter) sequence is defined by F%L, with F being the frame, and L being the length of the second sequence of downstream frequencies. In this example there is one sequence per slot, otherwise a different element may be required. The channels g, h and i are selected from a second (shorter) sequence of upstream frequencies referenced by the value of the frame in which the signals G, H and I are transmitted. The element to use from the second (shorter) sequence is defined by F%L, with F being the frame, and L being the length of the second sequence of upstream frequencies. In this example there is one sequence per slot, otherwise a different element may be required. Of course usually a sequence is longer and comprises more than three frequencies, therefore the frequency signals shown are only parts of sequences. At start, in the first mode (synchronization and set-up), the second sequence of downlink frequencies and the second sequence of upstream frequencies may be the same. Later, in the second mode (active connection), after modifications have been made, they may be different.

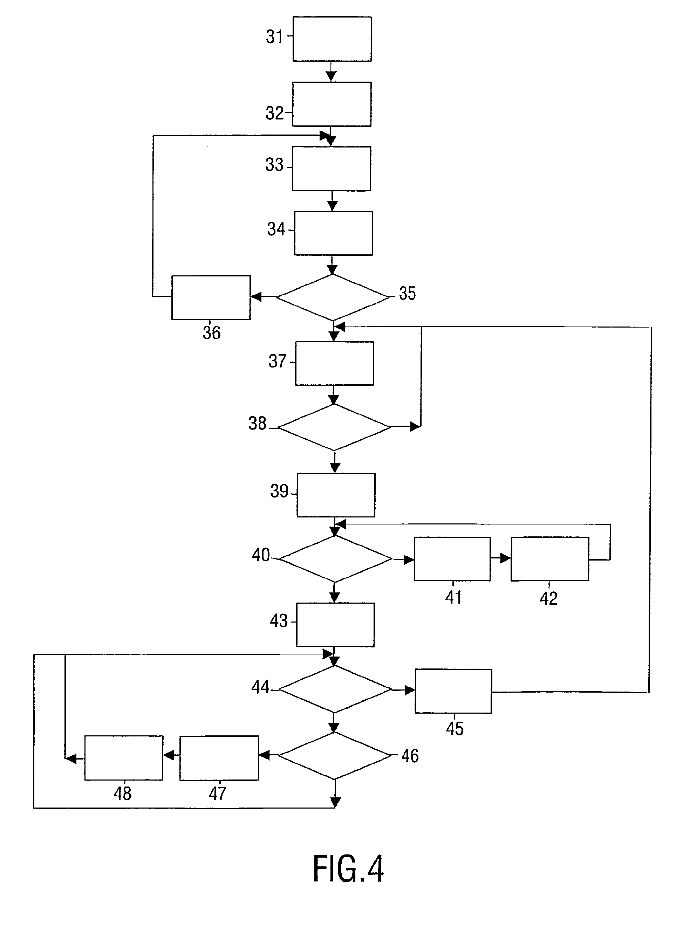

In the flow chart of a method according to the invention shown in Fig. 4, the following blocks have the following meaning:
Block 31: Start, generate the first and second sequences, go to block 32.
Block 32: Select the first sequence, the terminal device 1 is in a first mode (synchronization and set-up), go to block 33.
Block 33: Choose a frequency to attempt to lock to station device 2, go to block 34.
Block 34: Attempt to make reception on chosen frequency, go to block 35.
Block 35: If reception was good, go to block 37, else go to block 36.
Block 36: Delay for a period between attempts, can be zero, go to block 33.
Block 37: Delay for a period, can be zero, and make a reception from station device, go to block 38.
Block 38: Is connection set-up required, go to block 39, else go to block 37.
Block 39: Set-up connection using first (longer) sequence, the terminal device 1 is in a second mode (active connection), go to block 40.
Block 40: If quality on receptions made on frequencies that are in the relevant second (shorter) sequence are good, go to block 43, else go to block 41.
Block 41: Modify second (shorter) sequence, go to block 42.
Block 42: Inform station device 2, go to block 40.
Block 43: Switch to use the second (shorter) sequence and inform station device 2, go to block 44.
Block 44: If connection still required go to block 46, else go to block 45
Block 45: Take down connection and switch back to first (longer) sequence, go to block 37.
Block 46: If quality on receptions made on frequencies that are in the relevant second (shorter) sequence are good, go to block 44, else go to block 47.
Block 47: Modify second (shorter) sequence, go to block 48.
Block 48: Inform station device 2, go to block 44.

The operation of the terminal device 1 and the station device 2 as shown in Fig. 2 and as shown in Fig. 1 in greater detail is, in view of Fig. 3 and Fig. 4, as follows. At start, the first (longer) and second (shorter) sequence of frequencies are generated by generator 7 (block 31) in both devices 1 and 2. These sequences are stored in the fields 12 and 13 of memory 11. The selector 4 selects the first sequence of frequencies to be used for frequency hopping (block 32). The station device 2 transmits the radio frequency signals A-C based on the first sequence of frequencies, as shown in Fig. 3. The terminal device 1 is in the first mode (synchronization + set-up), and tries to detect a transmission from the station device 2 on one of the frequencies from the first (longer) sequence used for the radio frequency signals A-C. After having detected a transmission, the terminal device 1 can synchronize its own first sequence of frequencies with the first sequence of frequencies as used by the station device, to get in lock. The detection and the synchronization are technologies common in the art (block 33-38).

Once locked the terminal device 1 makes regular but infrequent receptions to ensure that it remains in lock with the station device 2 and to check for any requests from the station device 2. If lock is lost for any reason then the process starts again.

When in the locked phase a new phase can be entered to set-up two way communication between the station device 2 and the terminal device 1 (block 39). This is achieved by the terminal device 1 transmitting on a different slot to the one on which it is making receptions from the station device 2. As the terminal device 1 and the station device 2 are in lock using the same first (longer) sequence, the frequency to use for this new slot is known to both devices 1,2. The terminal device 1 and/or the station device 2 monitor(s) the frequencies in use that are in the second (short) sequence via its monitor 5 (block 40-42). The monitor 5 checks the quality of the frequencies in use for the second sequence of frequencies (block 40-42), for example by detecting signal parameters and comparing the detected signal parameters with each other and/or with thresholds, and/or by calculating noise per channel etc.

In case the quality of the channels in use for the second sequence of frequencies is sufficient, a communication takes place between the terminal device 1 and the station device 2. This communication results in the selectors 4 in the devices 1 and 2 selecting the second sequence (block 43). The station device 2 transmits the radio frequency signals D-F based on the second sequence of frequencies, as shown in Fig. 3. The monitor 5 in the terminal device 1 and/or station device 2 continue(s) to monitor the channels in use for the second sequence of frequencies.

At any stage while the monitor 5 of the terminal device 1 and/or the station device 2 is/are checking whether the channels in use for the second sequence of frequencies need to be modified (block 44-48), if the quality of the channels in use for the second sequence of frequencies is not sufficient, a communication takes place between the terminal device 1 and the station device 2. This communication results in the modifier 8 instructing the generator 7 in the devices 1 and 2 to modify the second sequence. If the first (longer) sequence is in use then although the second (shorter) sequence is modified it has no effect on the frequencies used for transmission/reception. If the second (shorter) sequence is in use, then the station device 2 transmits the radio frequency signals D-F based on the second and modified sequence of frequencies, as shown in Fig. 3. The monitor 5 in the terminal device and/or station device 2 continue(s) to monitor the channels in use for the second and modified sequence of frequencies, etc. (block 44-48).

The first mode for example comprises an initial-synchronization-and-active-connection-set-up-mode and the second mode for example comprises an active-connection-after-set-up-mode. Generally, a sequence of frequencies defines frequency channels or channel frequencies to be hopped through in a particular order. The generator 7 in the devices 1 and 2 generates the number of sequences for example by entering an identity code into an algorithm. The identity code may be unique per terminal device 1, in which case the sequences will be unique per terminal device 1. Of course, the station device 2 must be informed of the identity of the terminal device 1. The generation of one sequence by entering an identity code into an algorithm is a technology common in the art. A modification may comprise one or more added frequencies, one or more removed frequencies, and/or one or more replaced frequencies. Preferably, the second sequence is a subset of the first sequence. In this case, any monitoring of channels may be limited to the channels of the first sequence, because these channels include the channels of the second sequence.

The first and second modes represent states of the devices 1 and 2. In other words, the processor system 10 will supervise the state of its device 1,2. Although the selector 4, the monitor 5, the controller 6, the generator 7, the modifier 8, the memory 11 and the counter 14 are located outside the processor system 10, alternatively, one or more of these units may be located inside the processor system 10 in the form of hardware and/or software. The monitor 5 either monitors channels indirectly via the processor system 10, or more directly via the coupling between the transceiver 9 and the processor system 10 and/or via the coupling between the coupler 21 and the man-machine-interface 22. Alternatively, the monitor 5 may monitor most directly by locating this monitor 5 inside the transceiver 9. The counter 14 is controlled by the processor system 10 for, per frame and/or per slot, increasing a counting value. This counting value defines the element of the selected sequence to be used.

In Fig. 3, the radio frequency signals A-C are based on the first (longer) sequence of frequencies and the radio frequency signals D-F are based on the second (shorter) sequence of downstream frequencies as transmitted from the station device 2 to the terminal device 1. The radio frequency signals G-I are based on the second (shorter) sequence of upstream frequencies as transmitted from the terminal device 1 to the station device 2. So, for the downstream and the upstream direction, both before and after modifications have been made, different second (shorter) sequences may be used. Preferably, both/all second (shorter) sequences form a subset of the first (longer) sequence. The use of different sequences for different directions is a technology common in the art.

In Fig. 4, the communication between the devices 1 and 2 during active connections (after set-up) is possible owing to the fact that in the second mode the data in each slot comprises overhead information added to and multiplexed with the other data in this slot. This other data for example comprises audio information and/or video information and/or further information.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A device (1, 2) for use in a frequency hopping system (3) for frequency hopping through frequencies of a sequence of frequencies, wherein the device (1,2) comprises a selector (4) adapted to select a sequence from a number of sequences, which number of sequences comprises a first sequence and a second sequence, which first sequence is longer than the second sequence,
**characterized by**
a controller (6) adapted to control the selector (4) to select the first sequence during synchronizing and setting up a connection of the device (1,2) with a further device (1, 2) and to select the second sequence during the connection with the further device (1,2).

2. The device (1, 2) according to claim 1, further comprising a monitor (5) adapted to monitor channels in use for at least one of the sequences for, in dependence of a monitoring result, selecting at least one sequence.

3. The device (1, 2) according to claim 1, further comprising a generator (7) adapted to generate the number of sequences.

4. The device (1, 2) according to claim 3, wherein the generator (7) generates the number of sequences by entering an identity code into an algorithm.

5. The device (1,2) according to claim 1, further comprising a monitor (5) adapted to monitor channels in use for at least one of the sequences and further comprising a modifier (8) adapted to modify at least one sequence in dependence of a monitoring result.

6. The device (1, 2) according to claim 1, wherein the second sequence is a subset of the first sequence.

7. Frequency hopping system (3) comprising a terminal device (1) and a station device (2) for frequency hopping through frequencies of a sequence of frequencies, wherein the devices (1, 2) are each a device (1, 2) according to claim 1.

8. A method for use in a frequency hopping system (3) for frequency hopping through frequencies of a sequence of frequencies, comprising the steps of:
selecting a first sequence from a number of sequences during synchronizing and setting up a connection of a first device (1, 2) with a second device (1, 2), the number of sequences comprising the first sequence and a second sequence, the first sequence being longer than the second sequence; and
setting-up a two way communication between the first and second devices (1, 2) utilizing the second sequence after setting up the connection.

9. The method of claim 8, further comprising, before setting up the two-way communication, monitoring the frequencies of the second sequence, and setting-up the two-way communication if the quality of the frequencies of the second sequence is sufficiently high.

10. Processor program comprising a program code that when executed on a processor of a frequency hopping communication system performs the steps of the method of claim 8.

## Patentansprüche

1. Vorrichtung (1, 2) zur Verwendung in einem Frequenzsprungsystem (3) zum Frequenzspringen (frequency hopping) durch Frequenzen einer Frequenzfolge, wobei die Vorrichtung (1, 2) eine Auswahleinrichtung (4) aufweist, welche zum Auswählen einer Folge aus einer Anzahl an Folgen eingerichtet ist, wobei die Anzahl an Folgen eine erste Folge und eine zweite Folge umfasst, wobei die erste Folge länger als die zweite Folge ist,
**gekennzeichnet durch**
eine Steuerung (6), welche zum Steuern der Auswahleinrichtung (4) eingerichtet ist, um die erste Folge während dem Synchronisieren und Herstellen einer Verbindung der Vorrichtung (1, 2) mit einer weiteren Vorrichtung (1,2) auszuwählen und die zweite Folge während der Verbindung mit der weiteren Vorrichtung (1, 2) auszuwählen.

2. Vorrichtung (1, 2) nach Anspruch 1, welche zudem eine Überwachungseinrichtung (5), welche zum Überwachen von verwendeten Kanälen für zumindest eine der Folgen eingerichtet ist, zum Auswählen von zumindest einer Folge in Abhängigkeit eines Überwachungsergebnisses aufweist.

3. Vorrichtung (1, 2) nach Anspruch 1, welche zudem einen Generator (7) aufweist, welcher zum Erzeugen der Anzahl an Folgen eingerichtet ist.

4. Vorrichtung (1, 2) nach Anspruch 3, wobei der Generator (7) die Anzahl an Folgen durch Eingeben eines Kennungscodes in einen Algorithmus erzeugt.

5. Vorrichtung (1, 2) nach Anspruch 1, welche zudem eine Überwachungseinrichtung (5), welche zum Überwachen von verwendeten Kanälen für zumindest eine der Folgen eingerichtet ist, und zudem einen Modifikator (8) aufweist, welcher zum Modifizieren von zumindest einer Folge in Abhängigkeit eines Überwachungsergebnisses eingerichtet ist.

6. Vorrichtung (1, 2) nach Anspruch 1, wobei die zweite Folge eine Teilmenge der ersten Folge ist.

7. Frequenzsprungsystem (3) mit einer Endeinrichtung (1) und einer Stationseinrichtung (2) zum Frequenzspringen durch Frequenzen einer Frequenzfolge, wobei die Vorrichtungen (1, 2) jeweils eine Vorrichtung (1, 2) nach Anspruch 1 sind.

8. Verfahren zur Verwendung in einem Frequenzsprungsystem (3) zum Frequenzspringen durch Frequenzen einer Frequenzfolge, welches die folgenden Schritte aufweist:
Auswählen einer ersten Folge aus einer Anzahl an Folgen während dem Synchronisieren und Herstellen einer Verbindung einer ersten Vorrichtung (1, 2) mit einer zweiten Vorrichtung (1, 2), wobei die Anzahl an Folgen die erste Folge und eine zweite Folge aufweist, wobei die erste Folge länger als die zweite Folge ist; und
Herstellen einer Zweiwegekommunikation zwischen der ersten und zweiten Vorrichtung (1, 2) unter Verwendung der zweiten Folge nach dem Herstellen der Verbindung.

9. Verfahren nach Anspruch 8, welches zudem vor dem Herstellen der Zweiwegekommunikation das Überwachen der Frequenzen der zweiten Folge und das Herstellen der Zweiwegekommunikation aufweist, wenn die Qualität der Frequenzen der zweiten Folge ausreichend hoch ist.

10. Prozessorprogramm mit einem Programmcode, welches bei Ausführung auf einem Prozessor eines Frequenzsprung-Kommunikationssystems die Schritte des Verfahrens nach Anspruch 8 durchführt.

## Revendications

1. Dispositif (1, 2) utilisé dans un système (3) à saut de fréquence pour sauter de fréquence de façon continue dans une séquence de fréquences, le dispositif (1, 2) comprend un sélecteur (4) adapté à sélectionner une séquence d'un nombre de séquences, ledit nombre de séquences comprenant une première séquence et une seconde séquence, ladite première séquence étant plus longue que ladite seconde séquence,
**caractérisé par**
un dispositif (6) de commande adapté à commander ledit sélecteur (4) à sélectionner ladite première séquence en synchronisant et en établissant une communication entre ledit dispositif (1, 2) et un autre dispositif (1, 2), et à sélectionner ladite seconde séquence pendant ladite communication avec ledit autre dispositif (1, 2).

2. Dispositif (1, 2) selon la revendication 1, comprenant de plus un moniteur (5) adapté à surveiller des canaux utilisés pour au moins l'une desdites séquences pour sélectionner au moins une séquence en fonction d'un résultat de surveillance.

3. Dispositif (1, 2) selon la revendication 1, comprenant de plus un générateur (7) adapté à générer ledit nombre de séquences.

4. Dispositif (1, 2) selon la revendication 3, ledit générateur (7) générant ledit nombre de séquences en entrant un code d'identité dans un algorithme.

5. Dispositif (1, 2) selon la revendication 1, comprenant de plus un moniteur (5) adapté à surveiller des canaux utilisés pour au moins une desdites séquences, et comprenant en outre un modificateur (8) adapté à modifier au moins une séquence en fonction d'un résultat de surveillance.

6. Dispositif (1, 2) selon la revendication 1, ladite seconde séquence étant un sous-ensemble de ladite première séquence.

7. Système (3) à saut de fréquence, le système comprenant un dispositif (1) terminal et un dispositif (2) stationnaire pour sauter de fréquence de façon continue dans une séquence de fréquences, chacun desdits dispositifs (1, 2) étant un dispositif (1, 2) selon la revendication 1.

8. Procédé à utiliser dans un système (3) à saut de fréquence pour sauter de fréquence de façon continue dans une séquence de fréquences, le procédé comprenant des étapes suivantes:
sélectionner une première séquence d'un nombre de séquences en synchronisant et en établissant une communication entre un premier dispositif (1, 2) et un second dispositif (1, 2), ledit nombre de séquences comprenant ladite première séquence et une seconde séquence, ladite première séquence étant plus longue que ladite seconde séquence; et établir une communication en duplex entre lesdits premiers et seconds dispositifs (1, 2) en utilisant ladite seconde séquence après avoir établi ladite communication.

9. Procédé selon la revendication 8, comprenant en outre, avant établir ladite communication en duplex, surveiller les fréquences de ladite seconde séquence, et établir ladite communication en duplex si la qualité desdites fréquences de ladite seconde séquence est assez bien.

10. Programme de processeur, comprenant un code logiciel qui exécute lesdites étapes dudit procédé selon la revendication 8 lorsqu'un processeur d'un système de communication à saut de fréquence exécute ledit code de programme.
